# DEMANDE DE BREVET EUROPEEN

(11) **EP 1 643 448 A2**
(43) Date de publication de la demande: **05.04.2006**
(21) Numéro de dépôt: 05300786.0
(22) Date de dépôt: 29.09.2005
(51) Int. Cl.: G06T 11/00

(54) **Procédé de prédiction de l'apparence d'une portion au moins du corps d'un individu**

(30) Priorité: 29.09.2004 FR 0410323
(71) Demandeur: L'OREAL, 75008 Paris (FR)
(72) Inventeur: Bazin, Roland, 91570 Bievres (FR)
(74) Mandataire: Tanty, François

(57) **Abrégé**

La présente invention concerne un procédé de prédiction de l'apparence d'une portion externe du corps humain en fonction du temps et/ou d'un traitement, dans lequel au moins trois images sont générées, ces images correspondant à différents grades d'au moins un paramètre d'aspect en fonction du temps et/ou du traitement, la variation d'au moins ce paramètre d'aspect sur lesdites images étant non linéaire, le ou les paramètres d'aspect étant représentatifs du vieillissement et état choisis parmi le nombre de rides de la patte d'oie, la sévérité des rides de la patte d'oie, des rides du front, des sillons nasogéniens, de la ptose du bas du visage, des poches sous-oculaires, des taches pigmentaires, de la micro-circulation, de la calvitie, de la canitie, de la taille des pores du visage, étant représentatifs de la prise ou de la perte de poids et/ou étant représentatifs du photovieillissement.

## Description

La présente invention concerne notamment les procédés et systèmes permettant de simuler et/ou de suivre et/ou de prédire l'évolution de l'aspect d'au moins une portion du corps d'un individu en fonction du temps et/ou d'un traitement.

Le brevet US 6 761 697 divulgue un procédé pour prédire l'évolution d'au moins une condition d'une portion externe du corps d'un individu.

Le brevet US 4 276 570 décrit un procédé et un système permettant de produire une image d'un visage à différents âges. Une première image d'un individu est acquise, ainsi qu'une deuxième image d'un autre individu, plus âgé ou plus jeune, selon que l'on cherche à simuler un vieillissement ou un rajeunissement. Ensuite, les images sont analysées de manière à mémoriser des différences entre celles-ci. Ces différences sont ensuite ajoutées à l'image première, de manière à simuler un vieillissement, par exemple. Dans un tel procédé, le choix de la deuxième image est déterminant pour le résultat de la simulation, et celle-ci peut s'avérer insuffisamment réaliste.

La publication « Age change for predicting future faces », 1999 IEEE International Fuzzy Systems Conférence Proceeding August 22-25, Séoul, Korea, divulgue un procédé pour prédire l'aspect d'un visage.

La demande internationale WO 02/37421 divulgue un procédé pour mettre en évidence les effets d'un produit cosmétique.

Il existe un besoin pour prédire l'évolution de l'aspect d'une portion au moins du corps d'un individu en fonction du temps et/ou d'un traitement, notamment à plusieurs échéances successives.

Une telle prédiction peut être utile par exemple pour satisfaire à une curiosité, prendre conscience du besoin d'un traitement ou de l'effet néfaste d'un environnement, ou encore permettre de réaliser plus précisément un maquillage visant à vieillir ou rajeunir l'apparence.

Il existe encore un besoin pour disposer d'atlas permettant d'évaluer des paramètres d'aspect en se référant à des tranches d'âge plutôt qu'à des grades arbitraires.

Il existe encore un besoin pour générer au moins une image permettant d'évaluer au moins un paramètre d'aspect.

L'invention vise à répondre à tout ou partie de ces besoins.

Selon l'un de ses aspects, l'invention a pour objet un procédé de prédiction de l'apparence d'une portion externe du corps humain en fonction du temps et/ou d'un traitement, dans lequel au moins trois images sont générées, ces images correspondant à différents grades d'au moins un paramètre d'aspect en fonction du temps et/ou du traitement.

La variation d'au moins ce paramètre d'aspect peut avantageusement être non linéaire.

La non linéarité de la variation d'au moins un paramètre d'aspect peut permettre de simuler l'évolution de l'aspect d'une portion au moins du corps d'un individu de manière relativement réaliste.

Par « variation non linéaire », il faut comprendre que la variation est non proportionnelle à la variable temps et/ou traitement pour au moins une période de temps ou de traitement.

La variable temps est par exemple exprimée en années ou avec une unité de temps plus courte, notamment dans le cas d'un traitement.

Dans le cas d'un traitement, la variable est par exemple la durée du traitement ou le nombre de doses d'un produit appliquées et/ou administrées.

L'évolution des grades avec le temps et/ou le traitement peut par exemple suivre une loi d'évolution non entièrement linéaire, par exemple polynomiale ou linéaire seulement par segments. La loi d'évolution est par exemple une fonction polynomiale de la variable temps, par exemple un polynôme de degré trois. La loi d'évolution peut être continûment dérivable, par exemple.

Les images générées peuvent correspondre à différents grades d'au moins deux paramètres d'aspect. Les lois d'évolution de ces paramètres d'aspect peuvent être différentes.

Selon un autre de ses aspects, l'invention a pour objet un procédé de prédiction de l'apparence d'une portion externe du corps humain en fonction du temps et/ou d'un traitement, dans lequel plusieurs images sont générées, correspondant à différents grades d'au moins deux paramètres d'aspect, ces grades suivant des lois d'évolution spécifiques et indépendantes.

Les images peuvent être générées, le cas échéant, à partir seulement d'une image de la personne pour laquelle le procédé de prédiction est mis en oeuvre, notamment une image numérique.

Le terme « image » doit être compris avec un sens large et englobe des représentations planes ou en relief, des photographies, des dessins, des mannequins. Les images peuvent être affichées ou imprimées ou rester sous la forme de fichiers électroniques. Une image 3D permet par exemple à l'observateur de modifier la direction d'observation. Les images peuvent, le cas échéant, être adaptées à une vision stéréoscopique.

Le terme « corps » englobe le visage.

Dans un exemple de mise en oeuvre, l'invention peut permettre par exemple dans le cas où l'on cherche à prédire l'aspect du visage à diverses échéances, de faire apparaître les différents signes du vieillissement sensiblement dans l'ordre où ils apparaissent dans la réalité et de les faire évoluer sensiblement avec la vitesse où ils évoluent dans la réalité. Cela peut permettre de prédire de manière relativement réaliste l'aspect du visage en tenant compte des évolutions différentes des signes du vieillissement.

Dans un exemple de mise en oeuvre, l'invention peut permettre de faire évoluer indépendamment l'une de l'autre au moins deux régions du visage, selon des lois d'évolution éventuellement différentes. Cela peut permettre par exemple d'évaluer des signes de vieillissement de manière relativement précise.

Les lois d'évolution pourront être différentes en fonction des paramètres d'aspect.

Une loi d'évolution est avantageusement une loi d'évolution statistique, déterminée à partir d'observations du paramètre d'aspect dans une population de référence.

La prédiction de l'apparence peut faire intervenir par exemple au moins deux lois d'évolution, notamment deux lois d'évolution non linéaires, d'au moins deux paramètres d'aspect, ces lois ayant de préférence été observées dans une population de référence, voire faire intervenir plus de lois d'évolution encore, par exemple au moins trois, mieux au moins cinq lois, lesquelles peuvent être des lois linéaires ou non.

La prédiction des différents paramètres d'aspect peut s'effectuer grâce à des lois d'évolution respectives, par exemple au nombre de deux au moins comme indiqué ci-dessus, qui diffèrent entre elles par exemple par l'abscisse à l'origine et/ou la pente de leur tangente sur différentes périodes de temps.

La variation d'au moins un paramètre d'aspect peut s'effectuer selon une loi d'évolution ayant au moins deux portions dont les pentes des tangentes sont différentes.

La population de référence précitée peut comporter plusieurs tranches d'âge et pour un paramètre d'aspect au moins, une loi statistique d'évolution de ce paramètre en fonction des tranches d'âge peut être déterminée, cette loi d'évolution pouvant ensuite être utilisée pour la prédiction ci-dessus. Une tranche d'âge peut être réduite, le cas échéant, à un âge unique.

A chaque tranche d'âge de la population de référence peut être associé un grade représentatif du paramètre d'aspect pour cette tranche d'âge. Le grade est par exemple une valeur numérique. Le grade représentatif est alors par exemple la valeur moyenne ou la valeur médiane des grades observés.

Le procédé de prédiction peut ainsi comporter la génèse d'une succession d'images associées à différentes tranches d'âge.

Au moins une image peut par exemple comporter une première portion provenant d'au moins une image réelle de l'individu objet de la simulation et au moins une deuxième portion provenant de la simulation, cette deuxième portion étant par exemple intégrée à l'image de manière à se fondre dans celle-ci. Un logiciel de morphing peut être utilisé à cette fin. Ce logiciel peut être mis en oeuvre de manière manuelle ou automatique. La deuxième portion peut être superposée à tout ou partie de la première portion. Plusieurs images provenant de la simulation peuvent être intégrées à des régions différentes de la première portion.

Chaque image correspondant au résultat de la prédiction pour une tranche d'âge peut être générée en fonction du grade attendu à cette tranche d'âge pour l'individu objet de la prédiction pour au moins un paramètre d'aspect et de l'apparence de ce paramètre d'aspect chez au moins une personne de la population de référence pour laquelle le paramètre d'aspect a été évalué comme ayant sensiblement le même grade que le grade attendu ou un grade proche. L'image peut être générée par exemple à partir de deux images au moins d'individus de la population de référence ayant des grades évalués encadrant le grade attendu.

Le ou les paramètres d'aspect peuvent être représentatifs du vieillissement, notamment de la peau du visage, et être choisis par exemple parmi le nombre de rides de la patte d'oie, la sévérité des rides de la patte d'oie, des rides du front, des sillons nasogéniens, de la ptose du bas du visage, des poches sous-oculaires, des taches pigmentaires, de la micro-circulation, de la calvitie, de la canitie ou de la taille des pores du visage, entre autres.

Les paramètres d'aspect peuvent encore être représentatifs par exemple de la prise ou de la perte de poids, du photovieillissement, ou des conséquences de la grossesse ou d'un traitement chirurgical.

L'invention a encore pour objet, selon un autre de ses aspects, un procédé pour mettre en évidence les effets d'un traitement, dans lequel on permet à un individu de prendre connaissance d'un premier résultat de prédiction et d'un deuxième résultat de prédiction, obtenus par la mise en oeuvre du procédé tel que défini plus haut, le deuxième résultat de prédiction étant obtenu avec une ou plusieurs lois d'évolution prenant en compte l'incidence du traitement sur l'évolution d'au moins un paramètre d'aspect.

L'individu peut prendre connaissance des premier et deuxième résultats au même instant ou non.

Les résultats se présentent par exemple sous la forme d'images simulant l'aspect de l'individu avec et sans traitement.

Le traitement peut comporter par exemple l'application et/ou la prise de produits cosmétiques, dermatologiques ou autres, notamment de compléments alimentaires, le suivi de régimes alimentaires, des massages et/ou des exercices physiques, des interventions chirurgicales.

Le traitement peut comporter notamment la prise et/ou l'application de produits retardant le photovieillissement et/ou l'application et/ou la prise de produits amincissants.

Le traitement peut également comporter la prise et/ou l'application de produits cosmétiques, notamment des produits destinés à traiter ou à masquer les signes du vieillissement, par exemple des produits de maquillage.

L'invention a encore pour objet, selon un autre de ses aspects, un atlas comportant au moins trois images associées à des tranches d'âge respectives, ces trois images correspondant à différents grades d'au moins un même paramètre d'aspect, l'évolution de ce paramètre d'aspect étant non linéaire pour ces images au moins.

L'atlas peut compter au moins cinq, voire dix ou même vingt images.

Ces images peuvent correspondre à différents grades d'au moins deux paramètres d'aspect. Les lois d'évolution de ces paramètres d'aspect peuvent être différentes.

L'invention a encore pour objet, selon un autre de ses aspects, un procédé permettant de simuler l'aspect d'une portion externe du corps humain, cette portion externe comportant au moins une première région et une deuxième région différente de la première,
procédé dans lequel une pluralité d'images de la portion externe sont générées et dans lequel :
- au moins un premier paramètre d'aspect pour la première région évolue entre les images selon une première loi d'évolution, et
- au moins un deuxième paramètre d'aspect pour la deuxième région évolue entre les images selon une deuxième loi d'évolution, différente de la première.

Selon ce procédé, la pluralité d'images peut comporter au moins trois images, l'évolution des premier et deuxième paramètres d'aspect étant non linéaire entre ces trois images au moins.

Le procédé peut éventuellement comporter la sélection par l'utilisateur des première et seconde régions.

L'invention a encore pour objet, selon un autre de ses aspects, un atlas comportant au moins trois images associées à des tranches d'âge respectives, ces trois images correspondant à différents grades d'au moins un même paramètre d'aspect, chaque image associée à une tranche d'âge correspondant au grade représentatif de ce paramètre d'aspect dans cette tranche d'âge pour une population de référence. L'évolution de ce paramètre d'aspect peut être non linéaire pour ces images au moins.

L'image associée à une tranche d'âge, connaissant le grade représentatif de cette tranche d'âge, est par exemple une image provenant d'un individu de la population de référence dont le grade évalué est proche ou égal au grade représentatif ou une image générée par morphing à partir d'images d'individus de la population de référence dont les grades évalués respectifs encadrent par exemple le grade représentatif.

L'atlas peut comporter, pour chaque tranche d'âge, au moins deux images correspondant à des grades s'écartant d'une manière prédéfinie du grade représentatif, par exemple d'un ou plusieurs écarts-types, à des grades extrêmes constatés dans la population de référence ou à des grades fonction de la distribution des grades au sein de la population de référence, s'écartant par exemple du grade médian d'un nombre prédéfini de percentiles.

Selon un autre de ses aspects, l'invention a pour objet un procédé d'évaluation d'au moins un paramètre d'aspect d'une portion externe du corps humain, comportant les étapes suivantes :
- permettre une comparaison entre une image de la portion externe et une image de comparaison présentant au moins le paramètre d'aspect,
- faire varier l'image de comparaison de manière à modifier le grade du paramètre d'aspect selon une loi d'évolution prédéfinie de ce paramètre d'aspect.

La loi d'évolution prédéfinie peut correspondre à une variation du paramètre d'aspect en fonction de l'âge, entre des âges extrêmes. Cette variation peut être non linéaire.

Dans un tel procédé, on peut faire varier l'image de comparaison jusqu'à l'obtention d'une similitude visuelle du paramètre d'aspect sur l'image de comparaison et sur l'image de la portion externe.

Cela peut permettre par exemple de déterminer un âge apparent d'une région au moins de la portion externe en fonction de l'image de comparaison ayant abouti à la similitude visuelle.

L'image de comparaison peut être générée par morphing, par exemple à partir de l'image du sujet et d'au moins une image choisie parmi plusieurs images correspondant à des grades différents du paramètre d'aspect. L'image de comparaison peut encore être générée autrement, par exemple indépendamment de l'image du sujet.

La portion externe peut être une partie au moins d'un visage, par exemple un visage entier.

L'image de la portion externe, notamment du visage, peut être affichée sur un écran et l'on peut afficher à côté de cette image, sur l'écran, l'image de comparaison.

On peut afficher également une information relative à un âge apparent correspondant au grade du paramètre d'aspect de l'image de comparaison. Cela peut permettre de renseigner l'utilisateur en donnant des âges apparents pour différents signes du vieillissement.

Selon un autre de ses aspects, l'invention concerne un procédé de visualisation comportant les étapes suivantes :
- permettre de recevoir, par exemple de manière électronique, au moins une information relative à une modification d'au moins un paramètre d'aspect d'une portion externe du corps humain,
- générer au moins une image correspondant à une variation de ce paramètre d'aspect en réponse à l'information reçue, le paramètre d'aspect évoluant selon une loi prédéfinie.

Le procédé de visualisation peut également comporter une étape consistant à afficher avec l'image ainsi générée, un âge apparent correspondant à un grade du paramètre d'aspect sur l'image.

L'information peut être relative à une durée, notamment un nombre d'années.

L'information peut être relative à un traitement, notamment un traitement susceptible d'avoir un effet sur le vieillissement.

L'information peut encore être relative à un grade du paramètre d'aspect, par exemple une valeur numérique.

Dans un exemple de mise en oeuvre du procédé de visualisation, on fait évoluer différemment au moins deux régions différentes de la portion externe, par exemple au moins deux régions du visage.

On peut ainsi faire vieillir et/ou rajeunir, par exemple, différemment plusieurs régions du visage, l'évolution de chaque région ayant lieu indépendamment de celle des autres régions.

Cela peut permettre par exemple de mettre en évidence les effets du soleil ou d'un traitement ou d'un maquillage sur le visage, selon que telle ou telle région est ou non protégée ou traitée.

Selon un autre de ses aspects, l'invention concerne un procédé permettant de simuler l'aspect d'une portion externe du corps humain, comportant les étapes suivantes :
- permettre de sélectionner, notamment électroniquement, au moins deux régions de la portion externe,
- permettre de faire évoluer pour chacune desdites régions au moins un paramètre d'aspect, l'évolution du paramètre d'aspect d'une région pouvant s'effectuer indépendamment de l'évolution du paramètre d'aspect d'une autre région.

La portion externe peut comprendre le visage, et les régions sélectionnées sont par exemple choisies parmi le coin des lèvres, le coin de l'oeil et le front.

Le paramètre d'aspect de chaque région peut être modifié en agissant sur un organe de commande, lequel est choisi par exemple parmi un curseur, un bouton d'action, un clavier, une souris, une commande vocale ou un écran tactile, entre autres.

Les images des régions peuvent être affichées simultanément avec au moins une partie de la portion externe sur un même écran.

La portion externe peut être une image digitalisée, par exemple une image du sujet que l'on cherche à évaluer.

Cette image est par exemple masquée dans les régions sélectionnées et des images simulées sont affichées à côté de l'image du sujet.

Lorsque l'utilisateur agit sur l'organe de commande, l'aspect des images simulées peut être modifié.

En variante, les images simulées sont intégrées dans l'image de l'utilisateur et remplacent les images initiales des régions sélectionnées.

Au moins une information représentative de l'évolution du paramètre d'aspect de chaque région sélectionnée peut être affichée.

L'invention a encore pour objet, selon un autre de ses aspects, un système permettant de simuler l'évolution de l'aspect d'au moins une portion du corps d'un individu, comportant :
- des moyens d'acquisition du grade initial d'au moins un paramètre d'aspect,
- des moyens de calcul d'au moins un grade attendu de ce paramètre d'aspect en fonction d'une durée écoulée et/ou d'un traitement et d'au moins une loi d'évolution de ce paramètre d'aspect en fonction du temps et/ou du traitement dans une population de référence. Cette loi d'évolution peut être une loi non linéaire.

Le système peut également avantageusement comporter :
- des moyens de génèse graphique d'au moins une image simulant l'apparence de la portion du corps en fonction du grade attendu du paramètre d'aspect.

Selon un autre de ses aspects, l'invention concerne un système permettant de simuler l'évolution de l'aspect d'au moins deux régions d'au moins une portion du corps d'un individu, comportant :
- des moyens d'acquisition d'un grade initial d'au moins un paramètre d'aspect pour chacune de ces régions,
- des moyens de calcul d'au moins un grade attendu de chacun de ces paramètres d'aspect en fonction d'une durée écoulée et/ou d'un traitement et d'au moins deux lois d'évolution différentes de ces paramètres d'aspect en fonction du temps et/ou du traitement dans une population de référence.

Le système peut comporter :
- des moyens de génèse graphique d'au moins une image simulant l'apparence de la portion du corps en fonction du grade attendu du paramètre d'aspect pour chaque région.

Les moyens de calcul peuvent être agencés pour calculer les grades attendus d'une pluralité de paramètres d'aspect en fonction des lois d'évolution de ces paramètres d'aspect, observées dans une population de référence.

Les moyens de calcul peuvent être agencés pour calculer les grades attendus d'une pluralité de paramètres d'aspect en fonction des lois d'évolution de ces paramètres d'aspect, observées dans la population de référence.

Les moyens de génèse graphique peuvent par exemple provoquer l'affichage d'une succession d'images simulant l'évolution de l'apparence du paramètre d'aspect en fonction du temps et/ou d'un traitement, selon les grades attendus calculés.

Les moyens de calcul peuvent être agencés pour accéder à au moins un fichier où sont enregistrées les lois d'évolution. Ces dernières peuvent être des lois d'évolution statistiques, non linéaires. L'accès à ce fichier peut, le cas échéant, s'effectuer par le biais d'un réseau informatique et/ou de téléphonie.

Les moyens de calcul et de génèse graphique peuvent comporter un ou plusieurs ordinateurs, par exemple un micro-ordinateur seul ou connecté à un serveur distant.

L'invention a encore pour objet un procédé pour promouvoir la vente d'un produit et/ou d'un traitement, comportant les étapes suivantes :
- faire état, notamment par voie électronique, d'une simulation de l'évolution d'au moins un paramètre d'aspect sans traitement,
- faire état, notamment par voie électronique, d'une simulation de l'évolution du même paramètre d'aspect en cas de traitement.

La promotion pourra s'effectuer par n'importe quel canal de communication. Elle pourra être faite notamment par un vendeur, directement sur un point de vente, par la radio, la télévision ou le téléphone, notamment dans le cadre de spots publicitaires ou de messages courts. Elle pourra être faite également par le canal de la presse écrite ou par le biais de tout autre document, en particulier à des fins publicitaires. Elle pourra se faire également par Internet, par tout autre réseau informatique adéquat ou par un réseau de téléphonie mobile. Elle pourra être faite également directement sur le produit, notamment sur son packaging ou sur toute notice explicative qui lui est associée.

Selon un autre de ses aspects, l'invention a encore pour objet un procédé de prédiction d'au moins un paramètre d'aspect d'une portion externe du corps humain en fonction du temps et/ou d'un traitement, procédé dans lequel la prédiction est effectuée en fonction d'au moins une loi d'évolution déterminée à partir d'observations de ce paramètre d'aspect effectuées dans une population de référence.

Le mot « observations » doit se comprendre avec un sens large et désigne tous type d'évaluations visuelles et/ou mesures instrumentales. La portion du corps peut comporter le visage ou une partie du visage, le buste, un membre ou le corps entier, par exemple.

Un résultat de la prédiction peut être présenté par exemple sous la forme d'une ou plusieurs images simulant l'apparence du ou des paramètres d'aspect en fonction du temps et/ou du traitement.

L'invention pourra être mieux comprise à la lecture de la description détaillée qui va suivre, d'exemples de mise en oeuvre non limitatifs de celle-ci, et à l'examen du dessin annexé, sur lequel :
- la figure 1 représente, de manière schématique, un atlas des rides de la patte d'oie,
- la figure 2 représente, de manière schématique, un atlas de la ptose du bas du visage,
- la figure 3 représente, de manière schématique, un atlas du sillon nasogénien,
- la figure 4 représente, de manière schématique, un atlas des rides du front,
- la figure 5 représente, de manière schématique, un atlas des poches sous-oculaires,
- la figure 6 représente la loi d'évolution du grade moyen du nombre de rides de la patte d'oie chez l'homme caucasien, en fonction de la classe d'âge,
- la figure 7 représente l'évolution du grade moyen de sévérité des rides de la patte d'oie chez l'homme caucasien, en fonction de la classe d'âge,
- la figure 8 représente l'évolution du grade moyen de sévérité des rides du front chez l'homme caucasien, en fonction de la classe d'âge,
- la figure 9 représente l'évolution du grade moyen de sévérité du sillon nasogénien chez l'homme caucasien, en fonction de la classe d'âge,
- la figure 10 représente l'évolution du grade moyen de sévérité de la ptose chez l'homme caucasien, en fonction de la classe d'âge,
- la figure 11 représente l'évolution du grade moyen de sévérité des poches sous-oculaires chez l'homme caucasien, en fonction de la classe d'âge,
- la figure 12 illustre les allures respectives de différentes lois d'évolution de paramètres d'aspect caractérisant le vieillissement chez l'homme caucasien, en fonction de l'âge,
- la figure 13 est un schéma en blocs illustrant par exemple un procédé selon l'invention,
- les figures 14 à 18 représentent, de manière schématique, des exemples d'images obtenues par la mise en oeuvre du procédé de la figure 13,
- les figures 19 et 20 sont des exemples d'atlas dans lesquels on associe à chaque image de l'atlas une tranche d'âge,
- la figure 21 est un schéma en blocs illustrant un exemple de procédé permettant de réaliser un atlas selon les figures 19 ou 20,
- la figure 22 est un schéma en blocs illustrant un exemple de procédé permettant de faire apparaître l'effet d'un traitement,
- la figure 23 est un schéma en blocs illustrant un procédé de simulation de l'évolution de l'aspect,
- la figure 24 illustre, de manière schématique, la possibilité d'un traitement à distance des données,
- la figure 25 illustre un autre exemple de mise en oeuvre de l'invention,
- les figures 26 à 28 illustrent des évolutions de l'aspect de la zone sélectionnée de la figure 25, et
- les figures 29 et 30 illustrent d'autres exemples de mise en oeuvre de l'invention.

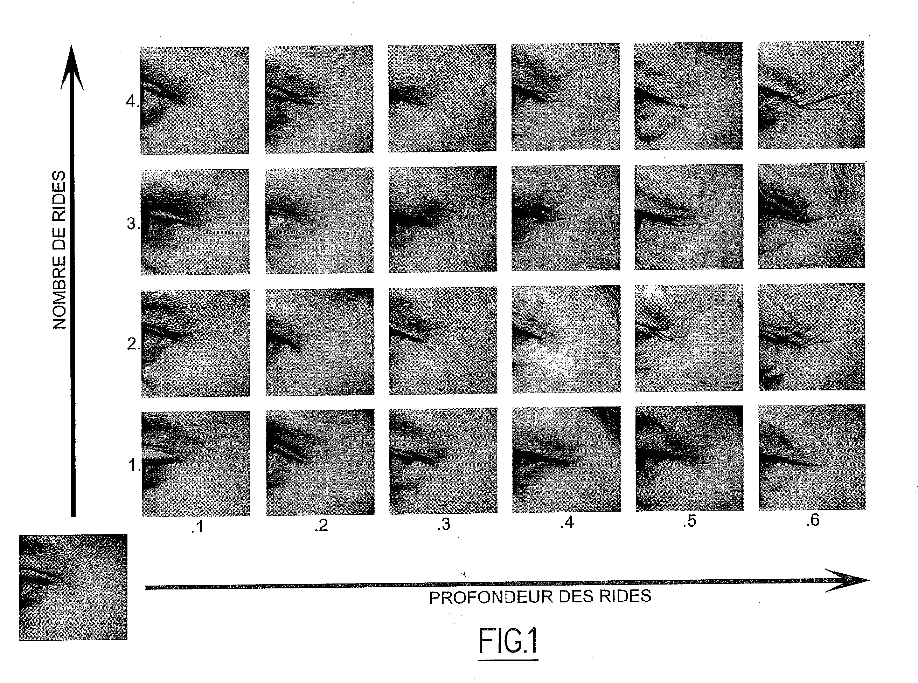

On a représenté aux figures 1 à 5 différents exemples d'atlas qui peuvent être utilisés pour évaluer les paramètres d'aspect caractérisant le vieillissement d'une population de référence comportant plusieurs tranches d'âge, par exemple une population caucasienne d'hommes.

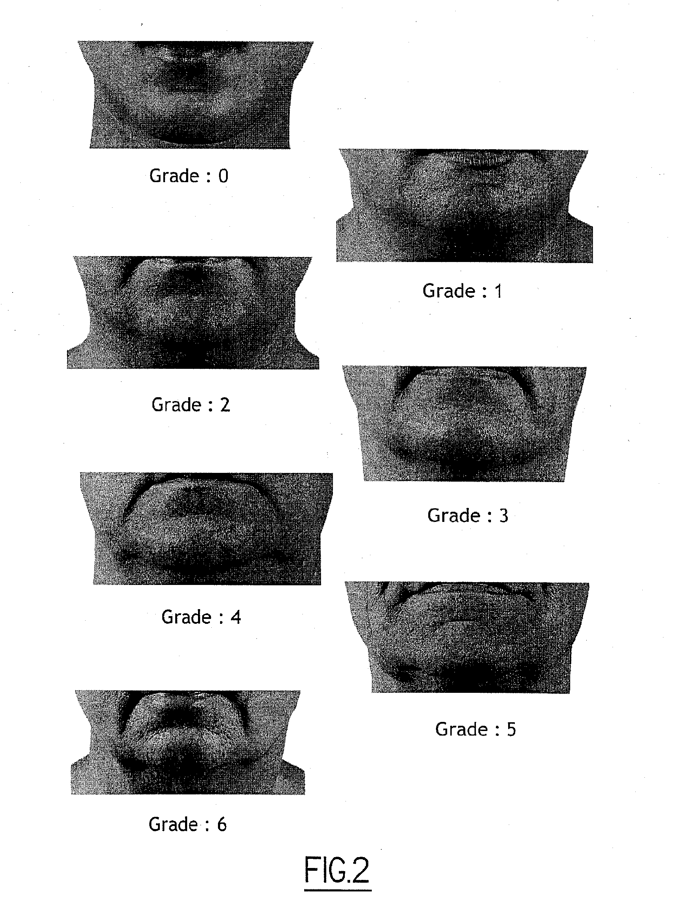

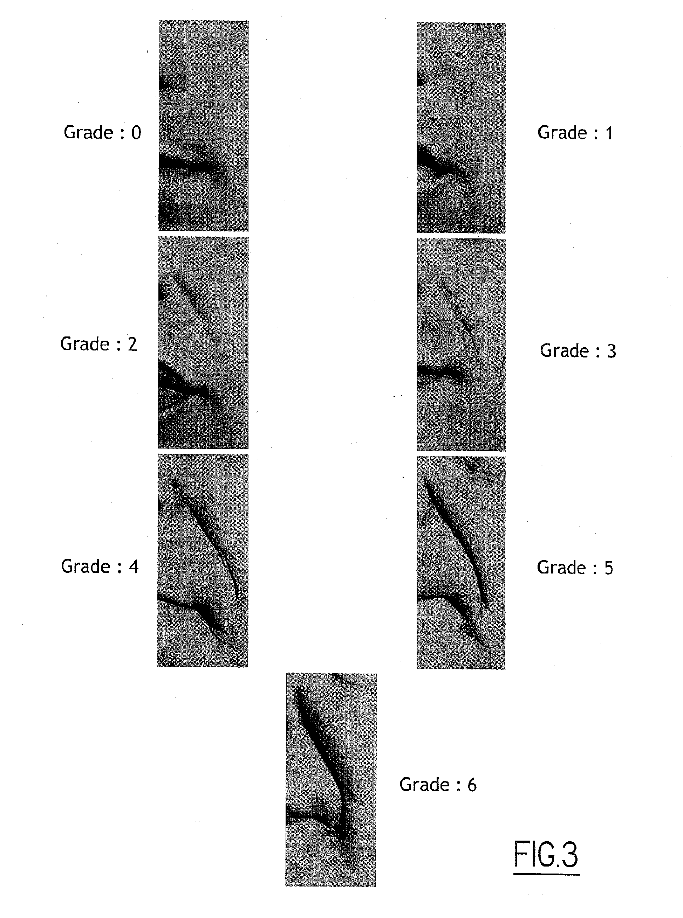

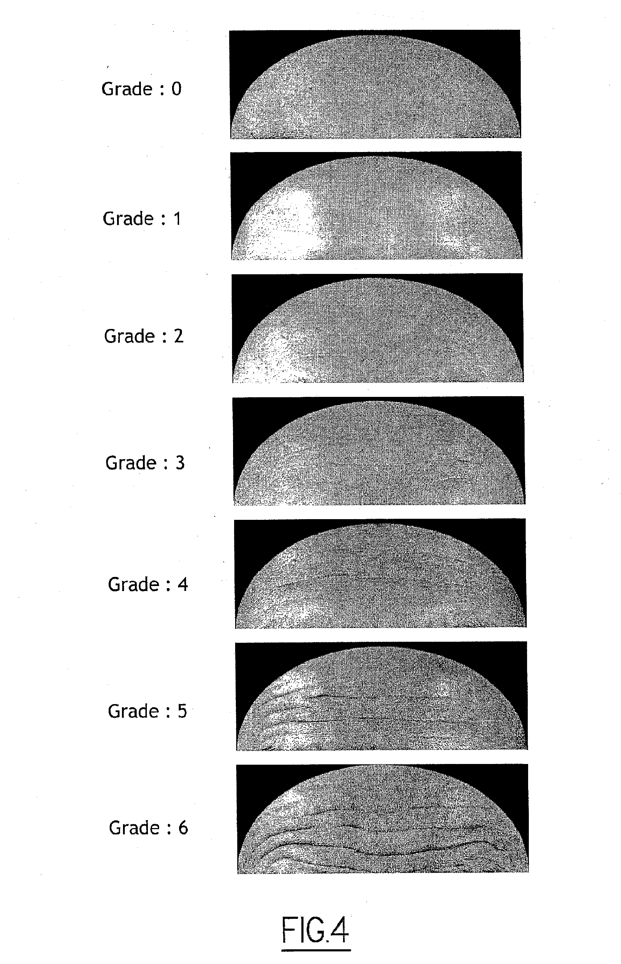

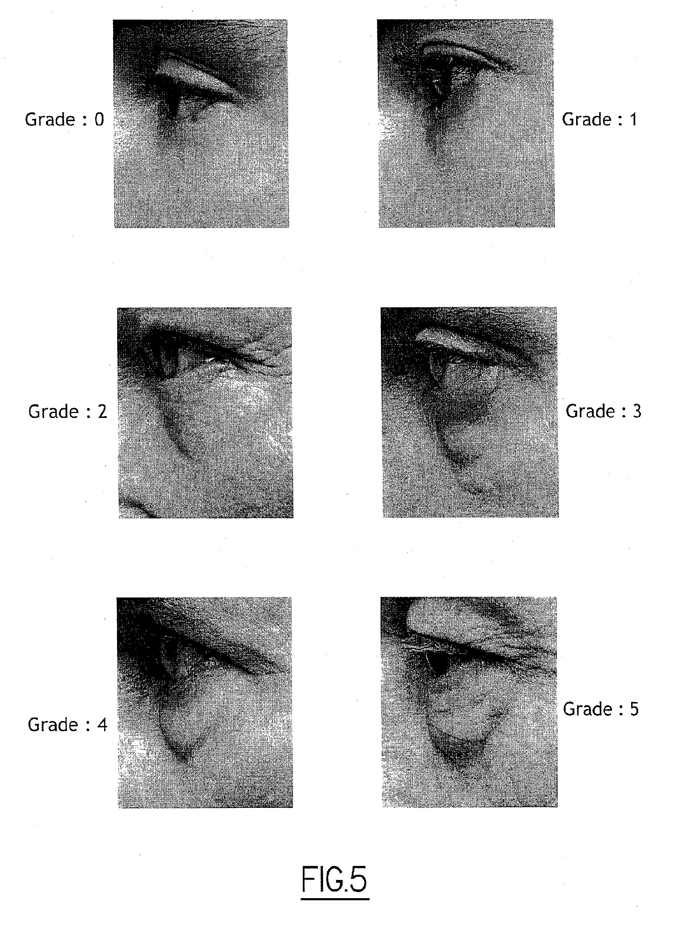

Le nombre de rides et la sévérité des rides de la patte d'oie peuvent par exemple être évalués pour cette population de référence en utilisant l'atlas de la figure 1, la sévérité de la ptose du bas du visage l'atlas de la figure 2, la sévérité du sillon nasogénien l'atlas de la figure 3, la sévérité des rides du front l'atlas de la figure 4 et la sévérité des poches sous-oculaires l'atlas de la figure 5.

On obtient ainsi pour chaque tranche d'âge un grade associé au paramètre d'aspect considéré, par exemple une valeur moyenne ou médiane.

Les atlas illustrés aux figures 1 à 5 ne constituent que des exemples et l'évaluation peut être effectuée autrement, par exemple en utilisant le procédé décrit dans la demande de brevet EP 1 216 658.

L'évaluation peut être effectuée visuellement, par exemple par un opérateur formé à cet effet.

En variante, l'évaluation peut être effectuée de manière automatisée, par exemple par un traitement d'image. Le brevet US 6 571 003, dont le contenu est incorporé par référence, fait mention d'algorithmes permettant de localiser des défauts du visage.

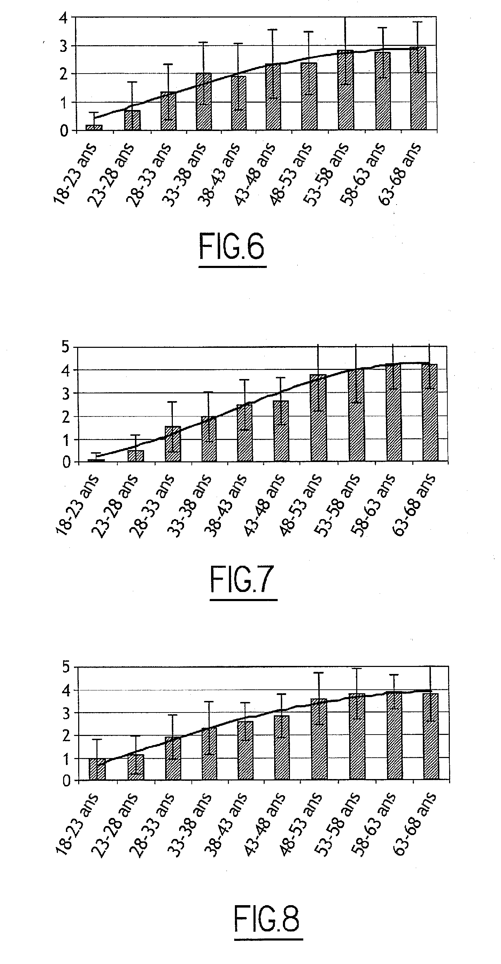

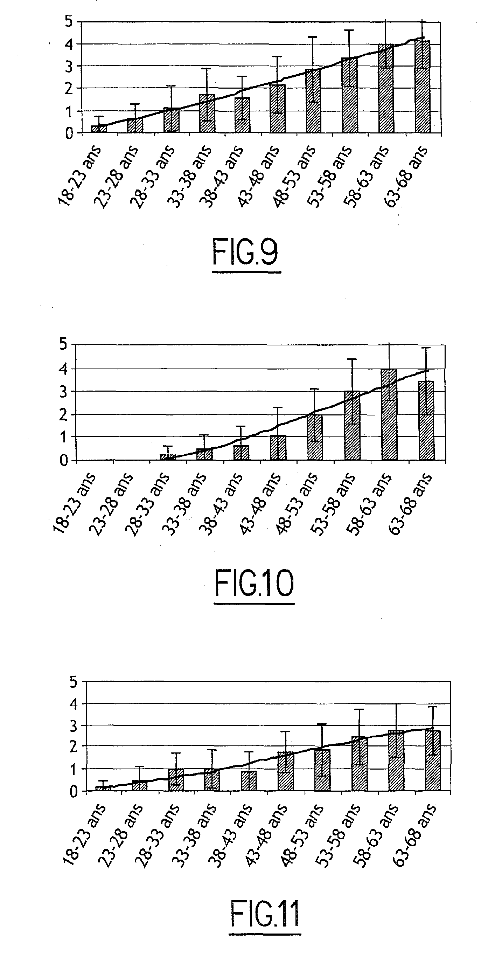

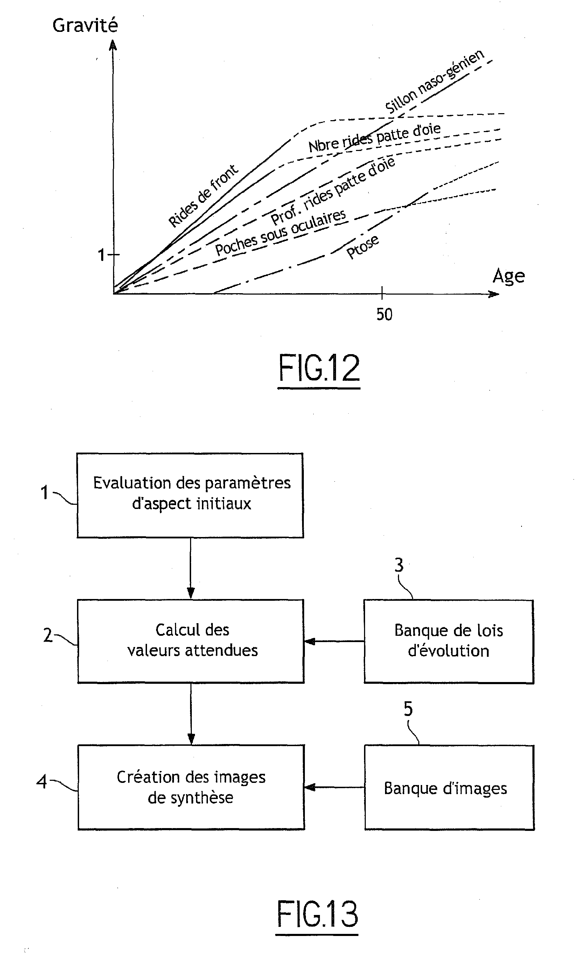

On a représenté à la figure 6 l'évolution du grade moyen du nombre de rides de la patte d'oie chez l'homme en fonction de diverses tranches d'âge de la population de référence, sur la figure 7 l'évolution du grade moyen de la sévérité des rides de la patte d'oie en fonction des mêmes tranches d'âge, sur la figure 8 l'évolution du grade moyen de sévérité des rides du front, sur la figure 9 l'évolution du grade moyen de sévérité du sillon nasogénien, sur la figure 10 l'évolution du grade moyen de sévérité de la ptose et sur la figure 11 l'évolution du grade moyen de sévérité des poches sous-oculaires.

En ajustant par des courbes polynomiales de degré trois les différentes valeurs moyennes obtenues par classe d'âge, on peut obtenir des lois d'évolution statistiques non linéaires des paramètres d'aspect considérés avec le temps, sous la forme y = ax³ + bx² + cx, x étant la variable temps.

On obtient le tableau suivant.

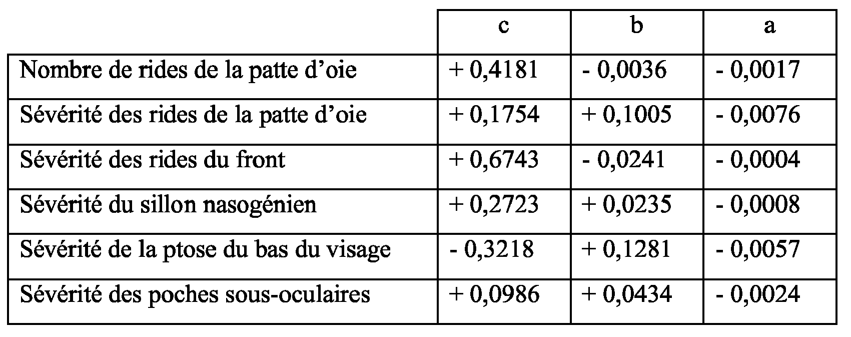

Il ressort des différentes valeurs des coefficients a, b et c que le sillon nasogénien est un signe clinique très représentatif de l'âge chez l'homme et qui continue à progresser régulièrement avec l'âge.

Les rides transversales du front et dans une moindre mesure le nombre de rides de la patte d'oie sont des signes précoces de l'âge chez l'homme, l'évolution se ralentissant vers 50 ou 55 ans.

La profondeur des rides de la patte d'oie et la sévérité des poches sous-oculaires évoluent plus lentement avec l'âge jusqu'aux alentours de 50 ans, âge à partir duquel on assiste à un ralentissement de leur vitesse d'évolution.

La ptose du bas du visage n'apparaît que plus tardivement, à partir de 40 ans environ, pour évoluer ensuite plus fortement.

On a représenté de manière schématique à la figure 12 les allures respectives de ces lois d'évolution en fonction de l'âge. On peut constater que l'évolution de certains paramètres d'aspect peut être approximée par des segments de droite pour certaines périodes de temps, que les pentes peuvent varier pour un même paramètre d'aspect au cours du temps et que les diverses lois d'évolution ne présentent pas les mêmes pentes.

La connaissance des lois d'évolution réelles permet de prédire de manière plus réaliste l'évolution de l'aspect d'une portion au moins du corps d'un individu en fonction du temps et/ou d'un traitement, en mettant par exemple en oeuvre le procédé illustré à la figure 13.

Dans ce procédé, on évalue dans une première étape 1 les paramètres d'aspect de l'individu objet de la simulation. On peut par exemple lui attribuer des grades pour chacun des paramètres d'aspect en utilisant les atlas précités ou un procédé de traitement d'image.

Une fois que le grade initial de chaque paramètre d'aspect est déterminé, on peut positionner l'individu sur les différentes courbes des figures 6 à 11.

Ensuite, on peut prédire les grades attendus pour un âge ultérieur à l'étape 2, en les calculant d'après les courbes données aux figures 6 à 11, par exemple en se décalant sur l'axe des abscisses de la durée à l'issue de laquelle on souhaite connaître les grades attendus, ceux-ci étant donnés par les ordonnées correspondantes.

Dans l'exemple considéré, le calcul s'effectue en utilisant comme lois d'évolution celles des figures 6 à 11, mais il va de soi que d'autres lois d'évolution pourraient être utilisées, par exemple en fonction de l'origine ethnique de l'individu, de son sexe, d'autres facteurs typologiques et/ou de facteurs d'environnement tels que le lieu d'habitation, la fréquence d'exposition au soleil, etc.

Une fois les grades attendus connus, une image de synthèse peut être générée de manière automatique ou manuelle, à partir d'une image de l'individu objet de la simulation.

Pour chaque paramètre d'aspect, connaissant le grade attendu, on peut rechercher dans une banque d'images 5 une image reproduisant l'apparence de ce paramètre d'aspect pour un tel grade. Cette image sert alors de référence pour reproduire sensiblement le même degré de sévérité du paramètre d'aspect sur l'image de synthèse, en utilisant par exemple un procédé de morphing, l'image prélevée dans la banque d'images étant par exemple incorporée au moins partiellement à l'image de synthèse.

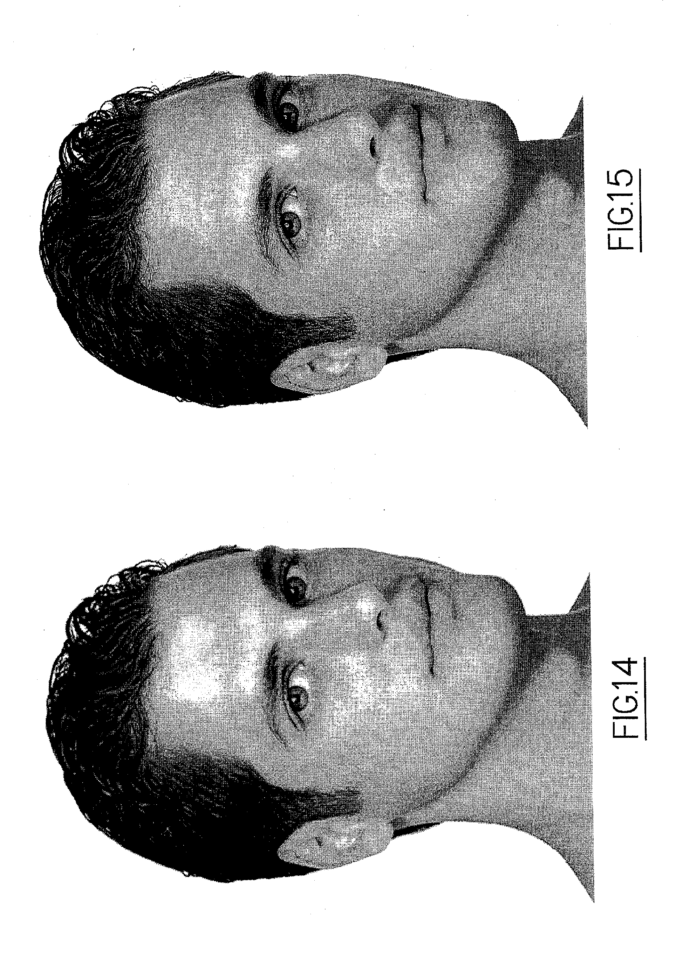

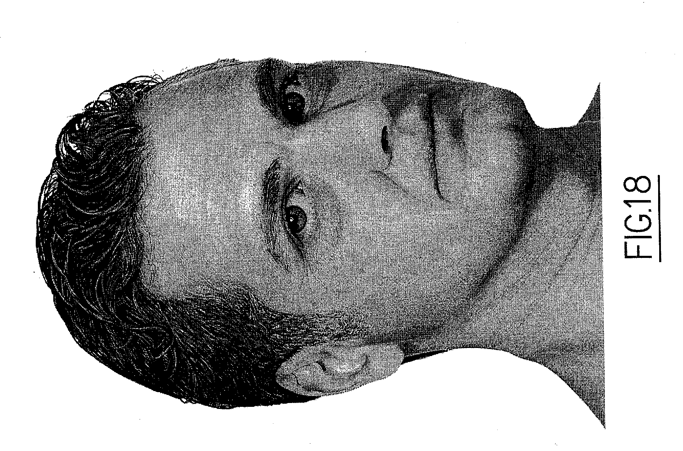

Pour un individu donné, les différents signes traduisant le vieillissement n'apparaîtront pas simultanément et n'évolueront pas à la même vitesse, comme illustré sur les figures 14 à 18.

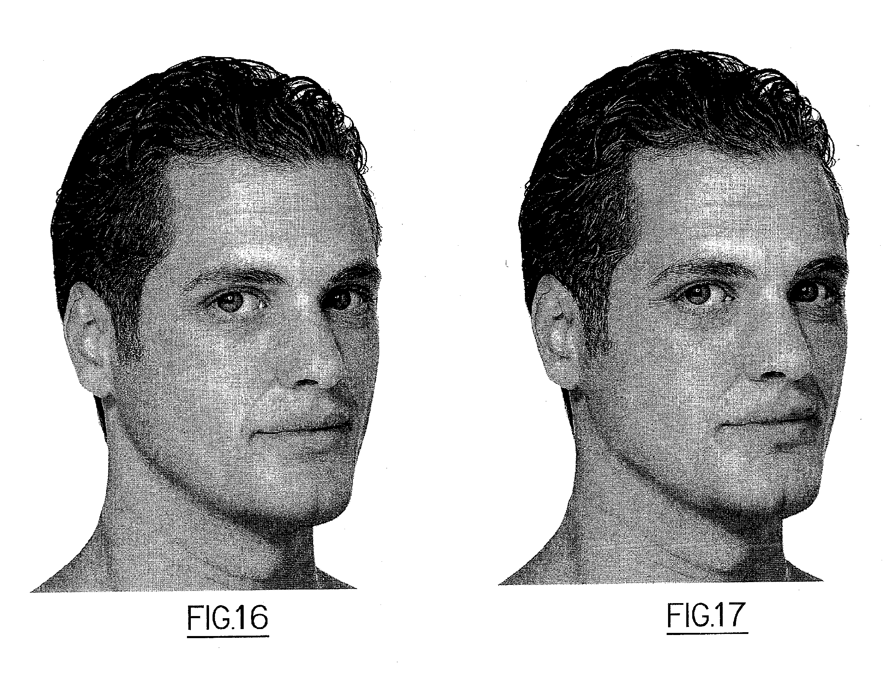

La figure 14 correspond à l'image initiale de l'individu objet de la simulation, âgé de 23 ans. Les figures 15 à 18 correspondent respectivement à l'aspect attendu à 33, 43, 53 et 63 ans.

L'invention peut encore être utilisée pour simuler un rajeunissement. Dans ce cas, les courbes des figures 10 à 11 peuvent être utilisées en se décalant cette fois vers la gauche du nombre d'années correspondant.

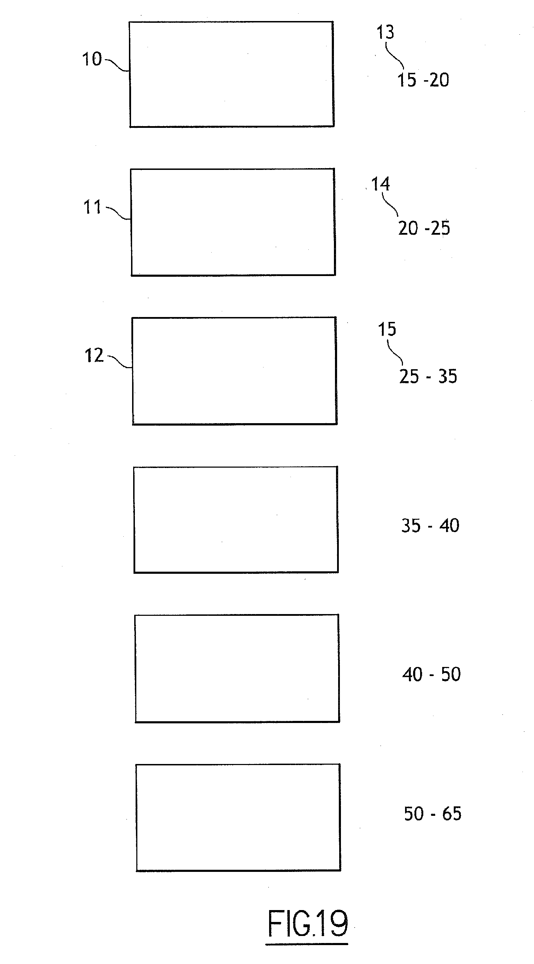

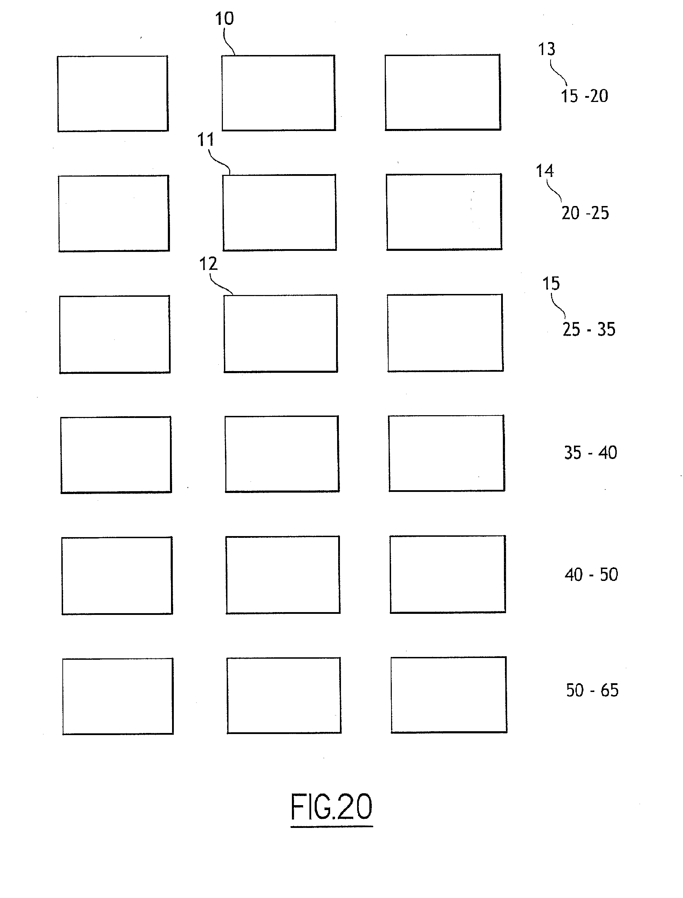

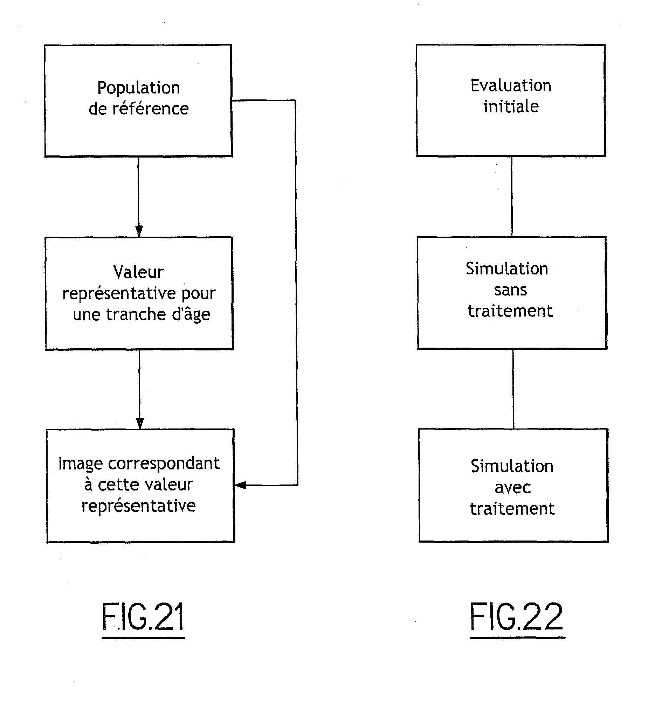

On va maintenant décrire, en se référant à la figure 21, un procédé permettant de générer des atlas tels que ceux illustrés aux figures 19 et 20.

Ces atlas comportent chacun une succession d'images, notamment au moins trois images 10, 11 et 12 correspondant à différents grades d'un paramètre d'aspect, par exemple l'un de ceux précités, caractéristiques du vieillissement chez l'homme.

Les images de l'atlas sont associées à des tranches d'âge, par exemple en ce qui concerne les images 10, 11 et 12 les tranches d'âge respectives 13, 14 et 15.

L'expression du grade en termes de tranches d'âge peut s'avérer préférable pour le grand public notamment, pour qui les grades habituellement utilisés ne sont pas aisément rattachables à la réalité.

Pour générer les images des atlas, on peut commencer par déterminer pour chaque tranche d'âge donnée d'une population de référence un grade représentatif, par exemple le grade moyen ou le grade médian.

Une fois connu ce grade représentatif, on peut extraire de la population de référence l'image d'un individu ayant un grade évalué sensiblement égal à ce grade représentatif ou générer par morphing une image correspondant à ce grade représentatif à partir de deux images disponibles d'individus évalués à des grades voisins du grade représentatif

Par exemple, si le grade représentatif d'une tranche d'âge donnée est une valeur numérique égale à 4, une image d'un individu de la population de référence ayant pour grade évalué la même valeur 4 pourra être utilisée.

En revanche, si le grade représentatif est par exemple une valeur numérique égale à 3,5 et qu'aucun individu dans la tranche d'âge considérée de la population de référence n'a été évalué à cette valeur, une image intermédiaire peut être générée par morphing à partir d'images d'individus de la population de référence ayant respectivement des grades 3 et 4.

On obtient ainsi un atlas avec des images 10, 11, 12 qui proviennent d'individus respectifs différents, au moins indirectement. Sur ces images, le paramètre d'aspect correspondant peut évoluer de manière non linéaire. L'image 10 correspond par exemple à un grade 3,5, l'image 11 à un grade 4,5 et l'image 12 à un grade 6, l'intervalle de temps entre les tranches d'âge 13, 14 et 15 étant par exemple constant.

Dans l'exemple de la figure 20, l'atlas comporte outre les images correspondant au grade représentatif pour chaque tranche d'âge, au moins une autre image, en l'espèce deux autres images 17 et 18, encadrant le grade représentatif.

Il peut s'agir par exemple d'images correspondant à des grades s'écartant du grade représentatif d'un écart-type dans le cas où le grade représentatif est un grade moyen ou d'un percentile donné dans le cas où le grade représentatif est un grade médian. Il peut s'agir encore, par exemple, des grades extrêmes constatés dans la population de référence pour la même tranche d'âge.

Par exemple, si l'image 10 correspond à un grade représentatif de 3,5 et que l'écart-type est de 0,5, les images 17 et 18 peuvent correspondre à des grades 3 et 4 respectivement, dans l'hypothèse où l'on choisit une présentation faisant intervenir l'écart-type.

Les atlas peuvent être imprimés ou affichés sur un écran. En cas d'affichage, les images peuvent être affichées simultanément ou non à l'écran. L'affichage des images peut par exemple s'effectuer séquentiellement.

Les images de l'atlas peuvent encore ne pas être affichées et se présenter sous la forme de fichiers informatiques ayant par exemple un format donné. Ces fichiers peuvent par exemple être destinés à être utilisés dans un système chargé d'évaluer automatiquement le grade d'un paramètre d'aspect et/ou de simuler l'aspect et/ou de prédire l'apparence d'un paramètre d'aspect après une certaine durée et/ou un traitement donné.

La tranche d'âge peut être affichée simultanément à l'image. Cette dernière peut encore être affichée en réponse à une requête contenant la tranche d'âge correspondante.

Les images de l'atlas peuvent être enregistrées sur un support informatique tel qu'une mémoire électronique ou un disque optique ou magnétique, par exemple de façon indexée relativement aux tranches d'âge correspondantes.

Les images de l'atlas peuvent encore être des têtes de mannequins, par exemple, ou des dessins.

L'invention peut être mise en oeuvre, dans un exemple, pour permettre à un consommateur de percevoir l'effet d'un traitement, par exemple un traitement anti-rides, un peeling ou un régime.

Pour cela, une évaluation initiale des paramètres de l'individu peut être effectuée, par exemple visuellement ou par un traitement d'une ou plusieurs images de cet individu, puis l'on peut simuler l'évolution de l'aspect avec et sans traitement en utilisant, au moins pour la simulation de l'aspect sans traitement, au moins une loi d'évolution observée dans une population de référence. La ou les lois d'évolution utilisées pour prédire l'aspect avec traitement peuvent être des lois d'évolution au moins partiellement observées ou calculées.

L'évolution de l'aspect de l'individu pourra ne concerner qu'une partie du visage. On peut par exemple générer des images pour lesquelles seule une région a évolué, le reste du visage restant le même qu'initialement.

Deux images simulant l'aspect avec et sans traitement peuvent ensuite être affichées.

Dans un exemple où le traitement est un traitement anti-rides, par exemple par injection de toxine botulique, la loi d'évolution avec traitement est observée dans une population de référence ayant suivi ce type de traitement.

L'invention peut être mise en oeuvre manuellement et/ou de manière automatique.

Par exemple, un système comportant des moyens d'acquisition, de calcul et de génèse graphique peut être utilisé.

L'acquisition des grades initiaux des paramètres d'aspect peut s'effectuer au moyen d'un clavier, suite à une évaluation visuelle par exemple, ou par traitement d'image, suite à l'enregistrement d'au moins une image de l'individu objet de l'évaluation.

Cette acquisition peut avoir lieu en un même endroit que le traitement ultérieur des données, par exemple sur un point de vente ou dans un institut de beauté, ou avoir lieu en un endroit différent.

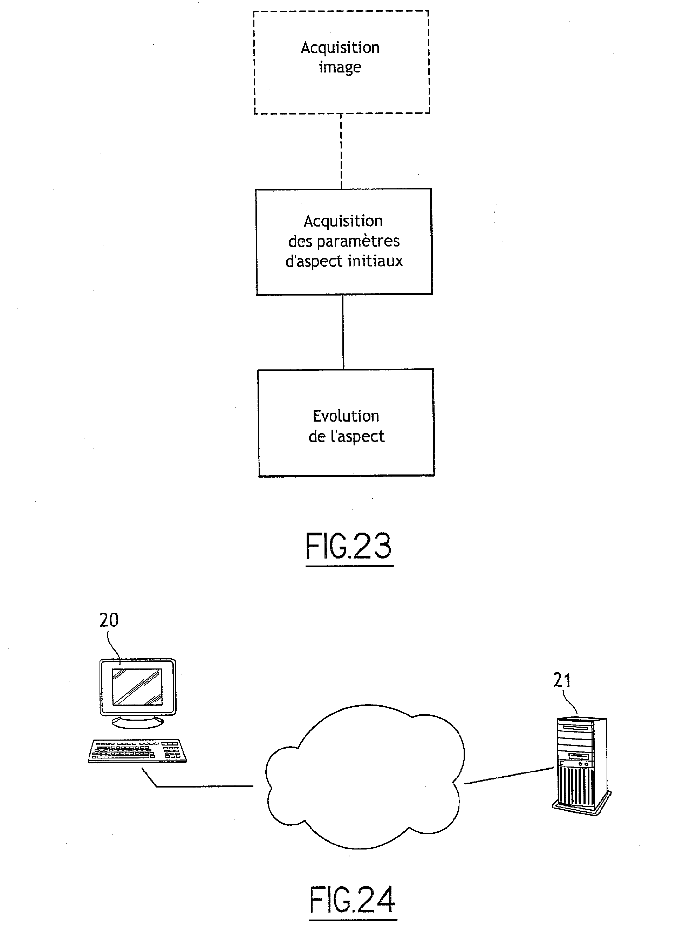

L'acquisition des grades initiaux des paramètres d'aspect peut par exemple s'effectuer, comme illustré à la figure 24, au moyen d'un ordinateur 20 et les données correspondantes être transmises par un réseau, par exemple le réseau Internet, à un serveur 21 distant, lequel délivre en retour un résultat, assorti le cas échéant d'une prescription et/ou d'un conseil et/ou de l'envoi d'un produit.

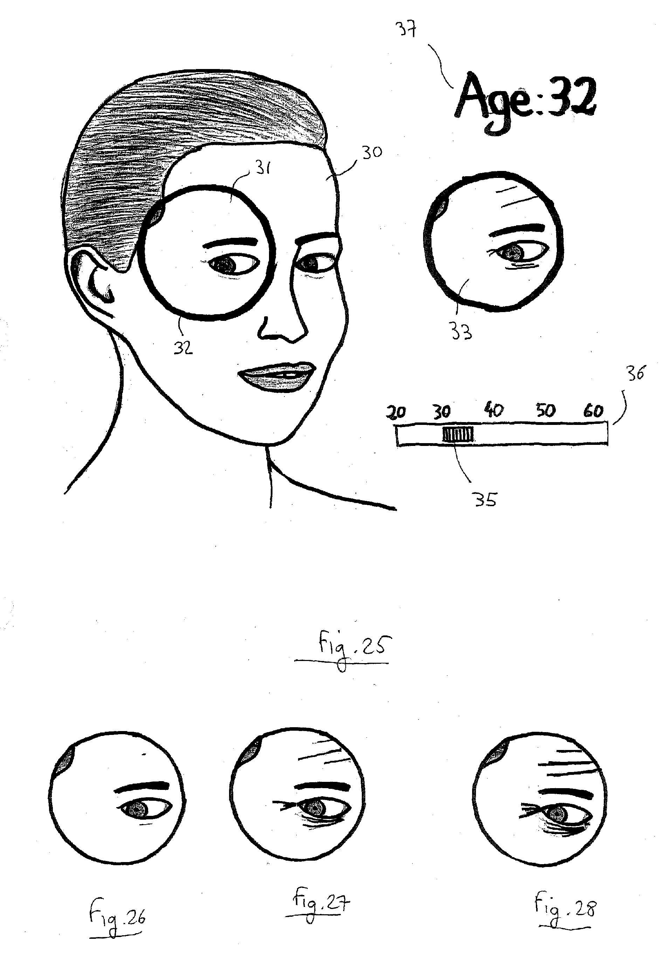

La figure 25 représente une image 30 d'un sujet qui est par exemple une image numérique obtenue à partir d'une caméra, d'un appareil photographique ou d'un scanner.

Dans l'exemple considéré, l'image 30 représente le visage entier, mais on ne sort pas du cadre de la présente invention lorsque l'image n'en représente qu'une portion seulement, voire représente une région du corps autre que le visage.

L'image 30 est par exemple affichée sur l'écran d'un système informatique qui comporte par exemple un microordinateur.

L'image 30 est par exemple un fichier image qui est ouvert avec un logiciel adapté du système informatique.

Dans l'exemple considéré, on permet à l'utilisateur du système informatique de sélectionner une région 31 de l'image 30.

La sélection peut s'effectuer au moyen d'une interface utilisateur, par exemple au moyen d'un clavier, d'une souris ou de tout autre dispositif permettant de commander par exemple le déplacement d'un repère 32 matérialisant le contour de la région sélectionnée.

Ce dispositif peut également permettre de modifier la taille et/ou la forme du contour de la région sélectionnée.

Le cas échéant, le positionnement du repère 32 s'effectue de manière automatique, en fonction d'informations communiquées par ailleurs au système.

Dans l'exemple considéré, on affiche simultanément à l'image 30 une image de comparaison 33 qui correspond à la région 31 sélectionnée, mais dont on peut modifier l'aspect.

Dans l'exemple considéré, un curseur 35 est prévu de manière à permettre à l'utilisateur d'entrer une information pouvant conduire à une modification de l'apparence de l'image 33.

Le curseur 35 peut être déplacé au sein d'une échelle d'âges 36 et l'âge correspondant au positionnement du curseur est par exemple affiché dans une zone 37 de l'écran.

L'utilisateur peut éventuellement entrer par ailleurs certaines informations concernant le sujet dont l'image 30 apparaît à l'écran, tel que par exemple son âge réel, son sexe et le type de peau ou toutes autres informations utiles.

Dans l'exemple considéré, l'image 33 présente une apparence qui est sensée correspondre à celle que l'on rencontre dans une population de référence dont l'âge correspond à celui indiqué par le curseur 35. Ainsi, les grades du ou des paramètres d'aspect présents dans l'image 33 ont par exemple même(s) valeur(s) que dans la population de référence.

L'image 33 est par exemple générée par morphing à partir de celle de la région 31 et d'une banque d'images contenant des images correspondant respectivement aux apparences observées pour différents âges dans la population de référence.

Pour générer l'image 33, on peut par exemple fusionner l'image de la région 31 avec plusieurs images correspondant aux grades voulus des différents paramètres d'aspect, tels que par exemple les rides de la patte d'oie, du front et les poches sous-occulaires.

L'apparition des différents signes de vieillissement s'effectue dans l'exemple considéré en respectant des lois d'évolution propres pour chacun de ces signes, qui sont par exemple celles illustrées à la figure 12.

En fonction de l'âge sélectionné, on peut par exemple visualiser un rajeunissement comme illustré à la figure 26 ou un vieillissement comme illustré aux figures 27 et 28.

La visualisation simultanée de l'image réelle 30 et de l'image de comparaison 33 peut permettre par exemple de déterminer l'âge apparent de la région 31 du visage, en déterminant le positionnement du curseur 35 qui permet d'obtenir une similitude d'aspect entre l'image 30 et l'image 33.

Le ou les grades correspondant au positionnement du curseur 35 peuvent être enregistrés automatiquement, par exemple sur un disque dur ou tout autre support.

Un diagnostic personnalisé peut éventuellement être proposé au vu de l'âge apparent, en comparant par exemple le résultat de l'évaluation avec des données de référence.

Le cas échéant, on peut quantifier plusieurs signes de vieillissement sur l'image 30 en les associant chacun à un âge apparent, en déplaçant le curseur 35 de façon à obtenir une similitude visuelle entre chaque signe de vieillissement sur l'image 30 et le même signe de vieillissement sur l'image 33.

Ainsi, on peut par exemple obtenir pour la région 31 différents âges apparents selon que l'on s'intéresse à l'un ou l'autre des signes de vieillissement qui y sont présents, tels que par exemple les rides de la patte d'oie, ceux du front ou les poches sous-occulaires.

Dans une variante de mise en oeuvre, l'image 33 est affichée en même temps que des informations représentatives des grades de plusieurs paramètres d'aspect apparaissant sur l'image, par exemple plusieurs curseurs, par exemple un pour chaque paramètre d'aspect. En déplaçant les curseurs, l'utilisateur peut modifier l'image 33 et agir par exemple sur tel ou tel type de signe de vieillissement.

Dans un exemple de mise en oeuvre de l'invention, on sélectionne différentes régions du visage 30 et l'on obtient pour chaque région sélectionnée une image 33 correspondante, dont on peut faire varier l'aspect.

Le cas échéant, on peut mémoriser les différents grades des paramètres d'aspect après l'évaluation et comparer ces valeurs à des nouvelles valeurs suite à un traitement par exemple. Après l'évolution, on peut également simuler l'évolution au cours du temps du grade d'au moins un paramètre d'aspect en fonction d'une durée écoulée et/ou d'un traitement.

On peut éventuellement simuler l'application d'un produit de maquillage, sur l'image 33 et/ou sur l'image 30.

Dans l'exemple de la figure 25, l'image 33 peut évoluer de manière continue lorsque le curseur 35 est déplacé, grâce à l'utilisation d'une technique de morphing. En variante, l'image 33 peut se modifier de manière non continue lorsque le curseur 35 est déplacé.

L'image 33 peut être générée à partir de l'image 30 ou en variante indépendamment de celle-ci, grâce à des images d'une banque d'image.

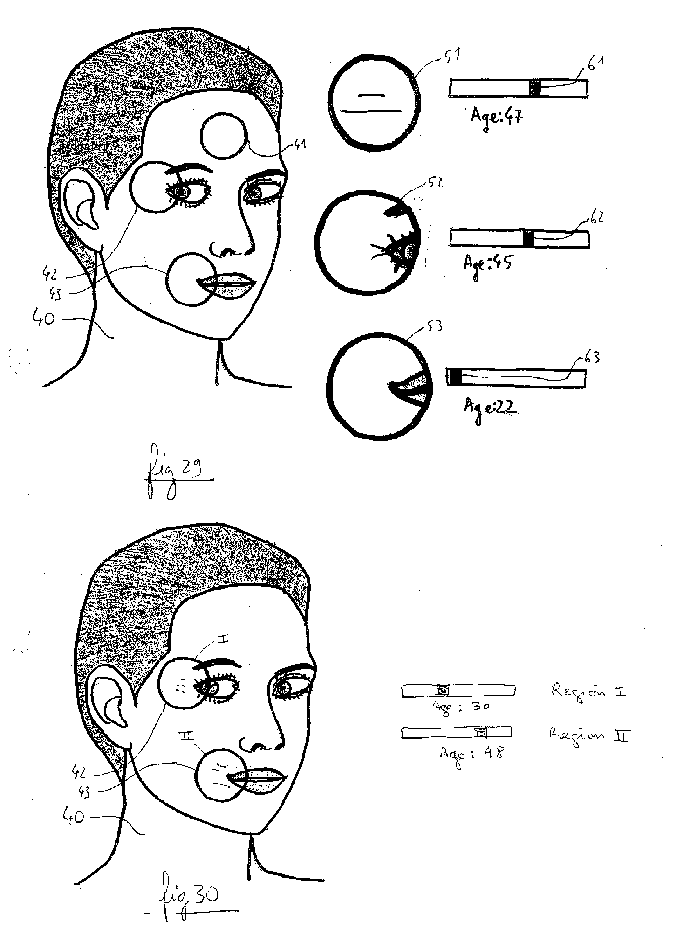

On a illustré à la figure 29 une variante de mise en oeuvre de l'invention, dans laquelle on sélectionne plusieurs régions et l'on fait varier pour chacune d'elle l'aspect indépendamment des autres régions.

Dans l'exemple considéré, on permet l'affichage d'une image 40 d'un sujet, notamment une image numérique, et l'on permet de sélectionner plusieurs régions, en l'espèce trois régions 41 à 43, sur ce visage. Un nombre différent de régions est possible sans sortir du cadre de l'invention.

Pour les différentes régions 41 à 43 on peut faire apparaître sur le même écran des images correspondantes 51 à 53 et des curseurs respectifs 61 à 63 permettant de modifier le grade du ou des paramètres d'aspect concernés.

Dans l'exemple considéré, l'utilisateur peut par exemple sélectionner le front, le coin de l'oeil et le coin de la bouche et utiliser les curseurs 61 à 63 pour modifier l'aspect sur les images 51 à 53 de ces régions.

L'aspect de chaque image 51 à 53 peut être modifié indépendamment des autres, ce qui peut par exemple permettre de donner un âge apparent à différentes régions du visage.

On peut par exemple attribuer à un utilisateur un profil qui résulte de l'évaluation des différentes régions au visage en terme d'âge apparent ou de score.

Chaque signe de vieillissement évolue selon une loi qui lui est propre, par exemple selon l'une des lois illustrées à la figure 12, d'autres lois étant bien entendu possibles.

L'affichage simultané de l'image 40 et des images 51 à 53 peut permettre d'évaluer, pour un sujet donné, chacun des paramètres d'aspect et de proposer ensuite à cette personne un traitement adapté, visant à corriger par exemple plutôt tel signe de vieillissement qu'un autre.

Les images 51 à 53 qui sont affichées sont par exemple générées par morphing à partir de l'image de la région correspondante sélectionnée sur l'image 40 et de banques d'images acquises dans une population de référence.

Sur la figure 30, on a illustré la possibilité de sélectionner au moins une région du visage, voire de plusieurs régions simultanément, et de faire vieillir ou rajeunir indépendamment chaque région à l'aide de curseurs respectifs.

L'aspect de chaque région sélectionnée est modifié selon les paramètres d'aspect concernés et en fonction des lois d'évolution qui sont spécifiques à ces paramètres d'aspect.

Sur les figures 25 à 29, des curseurs ont été représentés mais tout autre moyen permettant à l'utilisateur d'entrer des informations dans le système peut être utilisé, par exemple un clavier ou tout autre interface utilisateur, notamment un écran tactile, une commande vocale ou une souris.

Bien entendu, l'invention n'est pas limitée aux exemples qui viennent d'être décrits.

Les paramètres d'aspects peuvent ne pas concerner l'altération de l'aspect du visage mais par exemple celle du corps, notamment la prise de poids avec l'âge, la grossesse ou l'altération de la peau due au photovieillissement.

L'expression « comportant un » doit être comprise comme étant synonyme de « comportant au moins un », sauf si le contraire est spécifié.

## Revendications

1. Procédé de prédiction de l'apparence d'une portion externe du corps humain en fonction du temps et/ou d'un traitement, dans lequel au moins trois images sont générées, ces images correspondant à différents grades d'au moins un paramètre d'aspect en fonction du temps et/ou du traitement, la variation d'au moins ce paramètre d'aspect sur lesdites images étant non linéaire, le ou les paramètres d'aspect étant représentatifs du vieillissement et étant choisis parmi le nombre de rides de la patte d'oie, la sévérité des rides de la patte d'oie, des rides du front, des sillons nasogéniens, de la ptose du bas du visage, des poches sous-oculaires, des taches pigmentaires, de la micro-circulation, de la calvitie, de la canitie, de la taille des pores du visage, étant représentatifs de la prise ou de la perte de poids et/ou étant représentatifs du photovieillissement.

2. Procédé selon la revendication 1, **caractérisé par le fait que** la variation du paramètre d'aspect au moins s'effectue selon une loi d'évolution déterminée à partir d'observations de ce paramètre d'aspect effectuées dans une population de référence.

3. Procédé selon la revendication 2, **caractérisé par le fait que** la prédiction fait intervenir au moins deux lois d'évolution d'au moins deux paramètres d'aspect, ces lois ayant été observées dans la population de référence.

4. Procédé selon l'une des revendications 2 et 3, **caractérisé par le fait que** la population de référence comporte plusieurs tranches d'âge et **par le fait que** pour ledit paramètre d'aspect au moins, la loi d'évolution de ce paramètre est déterminée en fonction des tranches d'âge.

5. Procédé selon la revendication précédente, **caractérisé par le fait qu'**à chaque tranche d'âge est associé un grade représentatif du paramètre d'aspect pour cette tranche d'âge.

6. Procédé selon la revendication 5, **caractérisé par le fait que** le grade représentatif est une valeur numérique.

7. Procédé selon la revendication 6, **caractérisé par le fait que** le grade représentatif est la valeur moyenne des grades observés.

8. Procédé selon la revendication 6, **caractérisé par le fait que** le grade représentatif est la valeur médiane des grades observés.

9. Procédé selon l'une quelconque des revendications précédentes, **caractérisé par le fait qu'**il comporte la génèse d'au moins une image associée à une tranche d'âge, notamment d'une succession d'images associées à différentes tranches d'âge.

10. Procédé selon la revendication précédente, **caractérisé par le fait que** chaque image associée à une tranche d'âge pour l'individu objet de la prédiction est générée en fonction du grade attendu à cette tranche d'âge d'au moins un paramètre d'aspect et de l'apparence de ce paramètre d'aspect pour au moins une personne de la population de référence pour laquelle le paramètre d'aspect est évalué comme ayant sensiblement le même grade que le grade attendu ou un grade proche.

11. Procédé selon l'une quelconque des revendications précédentes, **caractérisé par le fait que** le ou les paramètres d'aspect sont représentatifs du vieillissement.

12. Procédé selon la revendication précédente, **caractérisé par le fait que** les paramètres d'aspects sont choisis parmi le nombre de rides de la patte d'oie, la sévérité des rides de la patte d'oie, des rides du front, des sillons nasogéniens, de la ptose du bas du visage, des poches sous-oculaires, des taches pigmentaires, de la micro-circulation, de la calvitie, de la canitie et de la taille des pores du visage.

13. Procédé selon l'une quelconque des revendications 1 à 11, **caractérisé par le fait que** les paramètres d'aspect sont représentatifs de la prise ou de la perte de poids.

14. Procédé selon l'une quelconque des revendications 1 à 11, **caractérisé par le fait que** les paramètres d'aspects sont représentatifs du photovieillissement.

15. Procédé permettant de simuler l'aspect d'une portion externe du corps humain, cette portion externe comportant au moins une première région, et une deuxième région différente de la première, procédé dans lequel :
- une pluralité d'images de la portion externe sont générées et dans lequel :
- au moins un premier paramètre d'aspect pour la première région évolue entre les images selon une première loi d'évolution, et
- au moins un deuxième paramètre d'aspect pour la deuxième région évolue entre les images selon une deuxième loi d'évolution, différente de la première.

16. Procédé selon la revendication 15, la pluralité d'images comportant au moins trois images.

17. Procédé selon la revendication 15, l'évolution des premier et deuxième paramètres d'aspect étant non linéaire entre au moins trois images de la pluralité.

18. Atlas comportant au moins trois images (10, 11, 12) associées à des tranches d'âge respectives, ces trois images correspondant à différents grades d'au moins un même paramètre d'aspect, l'évolution de ce paramètre d'aspect étant non linéaire pour ces images au moins, chaque image associée à une tranche d'âge correspondant au grade représentatif de ce paramètre d'aspect dans cette tranche d'âge pour une population de référence.

19. Atlas selon la revendication précédente, **caractérisé par le fait que** le grade représentatif est, pour une tranche d'âge de la population de référence, le grade moyen ou médian.

20. Atlas selon la revendication précédente, **caractérisé par le fait qu'**il comporte, pour chaque tranche d'âge, au moins deux images correspondant à des grades s'écartant d'une manière prédéfinie du grade représentatif.

21. Système permettant de simuler l'évolution de l'aspect d'au moins une portion du corps d'un individu, comportant :
- des moyens d'acquisition (20) du grade initial d'au moins un paramètre d'aspect,
- des moyens de calcul d'au moins un grade attendu de ce paramètre d'aspect en fonction d'une durée écoulée et/ou d'un traitement et d'au moins une loi d'évolution de ce paramètre d'aspect en fonction du temps et/ou du traitement dans une population de référence.
- des moyens de génèse graphique d'au moins une image simulant l'apparence de la portion du corps en fonction du grade attendu du paramètre d'aspect, cette image comportant une première portion provenant d'au moins une image réelle de l'individu objet de la simulation et au moins une deuxième portion provenant de la simulation.

22. Système permettant de simuler l'évolution de l'aspect d'au moins deux régions d'au moins une portion du corps d'un individu, comportant :
- des moyens d'acquisition (20) d'un grade initial de chacun de ces deux paramètres d'aspect,
- des moyens de calcul d'au moins un grade attendu de chacun de ces deux paramètres d'aspect en fonction d'une durée écoulée et/ou d'un traitement et des lois d'évolution de ces deux paramètres d'aspect en fonction du temps et/ou du traitement dans une population de référence.

23. Système selon l'une des revendications 21 ou 22, **caractérisé par le fait que** les moyens de calcul sont agencés pour calculer les grades attendus d'une pluralité de paramètres d'aspect en fonction des lois d'évolution de ces paramètres d'aspect, observées dans la population de référence.

24. Procédé de prédiction de l'apparence d'une portion externe du corps humain en fonction du temps et/ou d'un traitement, dans lequel au moins trois images sont générées, ces images correspondant à différents grades d'au moins un paramètre d'aspect en fonction du temps et/ou du traitement, la variation d'au moins ce paramètre d'aspect sur lesdites images étant non linéaire, au moins une image comportant une première portion provenant d'au moins une image réelle de l'individu objet de la simulation et au moins une deuxième portion provenant de la simulation.

25. Procédé d'évaluation d'au moins un paramètre d'aspect d'une portion externe du corps humain, comportant les étapes suivantes :
- permettre une comparaison entre une image (30) de la portion externe et une image de comparaison (33) présentant au moins le paramètre d'aspect,
- faire varier l'image de comparaison (33) de manière à modifier le grade du paramètre d'aspect selon une loi d'évolution prédéfinie de ce paramètre d'aspect.

26. Procédé selon la revendication précédente, dans lequel la loi d'évolution prédéfinie correspond à une variation non linéaire du paramètre d'aspect en fonction du temps.

27. Procédé selon l'une des revendications 25 et 26, dans lequel la loi d'évolution prédéfinie correspond à une variation du paramètre d'aspect en fonction de l'âge entre des âges extrêmes.

28. Procédé selon l'une des revendications 25 à 27, dans lequel on fait varier l'image de comparaison (33) jusqu'à l'obtention d'une similitude visuelle du paramètre d'aspect sur l'image de comparaison et sur l'image de la portion externe.

29. Procédé selon la revendication précédente, dans lequel on détermine un âge apparent d'une région au moins de la portion externe en fonction de l'image de comparaison ayant abouti à la similitude visuelle.

30. Procédé selon l'une quelconque des revendications 25 à 29, dans lequel l'image de comparaison est générée par morphing à partir de l'image du sujet et d'au moins une image choisie parmi plusieurs images correspondant à des grades différents du paramètre d'aspect.

31. Procédé selon l'une quelconque des revendications 25 à 30, dans lequel la portion externe est une partie au moins d'un visage.

32. Procédé selon la revendication précédente, dans lequel l'image de la portion externe est affichée sur un écran et dans lequel on affiche à côté de cette image, sur l'écran, l'image de comparaison (33).

33. Procédé selon la revendication précédente, dans lequel on affiche également une information relative à un âge apparent correspondant au grade du paramètre d'aspect de l'image de comparaison (33).

34. Procédé de visualisation comportant les étapes suivantes :
- permettre de recevoir, par exemple de manière électronique, au moins une information relative à une modification d'au moins un paramètre d'aspect d'une portion externe du corps humain,
- générer au moins une image correspondant à une variation de ce paramètre d'aspect en réponse à l'information reçue, le paramètre d'aspect évoluant selon une loi prédéfmie,
- afficher avec l'image ainsi générée, un âge apparent correspondant à un grade du paramètre d'aspect sur l'image.

35. Procédé selon la revendication précédente, dans lequel l'information est relative à une durée, notamment un nombre d'années.

36. Procédé selon l'une des revendications 34 et 35, dans lequel l'information est relative à un traitement, notamment un traitement susceptible d'avoir un effet sur le vieillissement.

37. Procédé permettant de simuler l'aspect d'une portion externe du corps humain, comportant les étapes suivantes :
- permettre de sélectionner, notamment électroniquement, au moins deux régions de la portion externe,
- permettre de faire évoluer pour chacune desdites régions au moins un paramètre d'aspect, l'évolution du paramètre d'aspect d'une région s'effectuant indépendamment de l'évolution du paramètre d'aspect d'une autre région.

38. Procédé selon la revendication précédente, dans lequel la portion externe comprend le visage.

39. Procédé selon l'une des deux revendications immédiatement précédentes, dans lequel les régions sélectionnées sont choisies parmi le coin des lèvres, le coin de l'oeil, le front.

40. Procédé selon l'une quelconque des revendications 37 à 39, dans lequel le paramètre d'aspect de chaque région peut être modifié en agissant sur un organe de commande.

41. Procédé selon la revendication précédente, dans lequel l'organe de commande est choisi parmi un curseur, un bouton d'action, un clavier, une souris, une commande vocale ou un écran tactile.

42. Procédé selon l'une quelconque des revendications 38 à 41, dans lequel des images (51, 52, 53) des régions sont affichées simultanément avec au moins une partie de la portion externe sur un même écran.

43. Procédé de prédiction de l'apparence d'une portion externe du corps humain en fonction du temps et/ou d'un traitement, dans lequel plusieurs images sont générées, correspondant à différents grades d'au moins deux paramètres d'aspect, ces grades suivant des lois d'évolution spécifiques et indépendantes.
